# EUROPÄISCHE PATENTSCHRIFT

(11) **EP 0 340 483 B1**
(45) Veröffentlichungstag und Bekanntmachung des Hinweises auf die Patenterteilung: **26.05.1993**
(21) Anmeldenummer: 89106316.6
(22) Anmeldetag: 10.04.1989
(51) Int. Cl.: B60J 1/00, B60J 1/08

(54) **Fahrzeugtür mit Fensterscheibe**
Vehicle door with window pane
Portière avec vitre

(30) Priorität: 03.05.1988 DE 3814919
(43) Veröffentlichungstag der Anmeldung: 08.11.1989
(73) Patentinhaber: Bayerische Motoren Werke Aktiengesellschaft, 80788 München (DE)
(72) Erfinder: König, Johann, D-8066 Günding (DE)

(56) Entgegenhaltungen:
- DE-A- 2 723 057
- DE-A- 3 517 581
- FR-A- 2 575 976

## Beschreibung

Die Erfindung bezieht sich auf ein Fahrzeug mit einer Fahrzeugtür nach dem Oberbegriff des Patentanspruches 1.

Aus der DE-A-35 17 581 ist eine Fahrzeugtür für ein Fahrzeug bekannt, bei der eine versenkbare Zweischeiben-Isolierglasscheibe so in einem Fensterrahmen geführt ist, daß die Außenscheibe zumindest annähernd bündig zur Fahrzeugaußenkontur verläuft. Mit derartigen Doppelglasscheiben läßt sich auf diese Weise der Luftwiderstandsbeiwert des Fahrzeuges vermindern und auch der Lärmpegel im Fahrzeuginneren absenken. Gerade wegen der guten Lärmdämmung im Bereich der Doppelverglasung machen sich andere Lärmquellen dafür aber um so deutlicher bemerkbar. Eine dieser Lärmquellen entsteht dadurch, daß auch ein relativ stabiler Fensterrahmen bei höheren Fahrgeschwindigkeiten durch den auf die relativ große Scheibenfläche einwirkenden Unterdruck nach außen gebogen werden kann. Dadurch kann eine verminderte Dichtwirkung zwischen Fensterrahmen und der restlichen Fahrzeugkarosserie bedingt sein, die wiederum Geräusche verursacht.

Der Erfindung liegt die Aufgabe zugrunde, die im Fahrzeuginnenraum wahrnehmbaren Geräusche weiter zu reduzieren und weiterhin eine gute Verriegelung der geschlossenen Tür gegenüber dem Fahrzeugaufbau zu gewährleisten.

Diese Aufgabe wird erfindungsgemäß bei einem Fahrzeug der vorausgesetzten Bauart durch die im Kennzeichen des Patentanspruches 1 angegebenen Maßnahmen gelöst. Es ist also der gesamte Fensterrahmen, gegenüber dem die Zweischeiben-Isolierglasscheibe außerdem noch verlagerbar ist, relativ zum restlichen Türkörper, das ist der unterhalb der Gürtellinie liegende Türkörper, absenkbar und wieder anhebbar. Bei geschlossener Fahrzeugtür wird der Fensterrahmen durch den ihn außen übergreifenden Abschnitt im Bereich des Randes des Seitenrahmens des Fahrzeugs gegen ein Verbiegen nach außen zuverlässig abgestützt. Die Abdichtung zwischen dem Fensterrahmen und der Fahrzeugkarosserie ist relativ einfach und trotzdem wirksam zu bewerkstelligen. Deshalb werden auch bei höheren Fahrgeschwindigkeiten keine Geräusche im Bereich des Dichtsystems erzeugt. Ein weiterer Vorteil der erfindungsgemäßen Lösung besteht darin, daß das Fahrzeug auch nicht so leicht durch gewaltsames Öffnen einer Tür aufgebrochen werden kann. Die Abstützung des Fensterrahmens zumindest im Bereich des oberen Dachrandes erschwert ein Aufbrechen des Fahrzeugs ganz erheblich. Der absenkbare Fensterrahmen kann in einer seitlichen

Führung in der restlichen Tür geführt sein. Das Absenken bzw. Heben dieses Rahmens kann zum Beispiel bei Betätigung des Außen- oder Innentürgriffs elektrisch oder pneumatisch oder auch auf andere Weise erfolgen. Beim Öffnen der Tür wird der Fensterrahmen zusammen mit der Fensterscheibe so weit abgesenkt, daß er unterhalb des ihn bei geschlossener Tür übergreifenden Abschnitts der Dachaußenhaut liegt. Dann kann die Tür leicht geöffnet werden.

Beim Schließen der Tür wird der Fensterrahmen inklusive der Zweischeiben-Isolierglasscheibe wieder angehoben und dann gegen Verlagerung nach außen im Bereich des Fahrzeugdaches abgestützt. Das Heben und Senken der Fensterscheibe im Fensterrahmen erfolgt durch einen separaten Fensterheber.

Weitere Ausführungsformen sind in den abhängigen Ansprüchen angegeben.

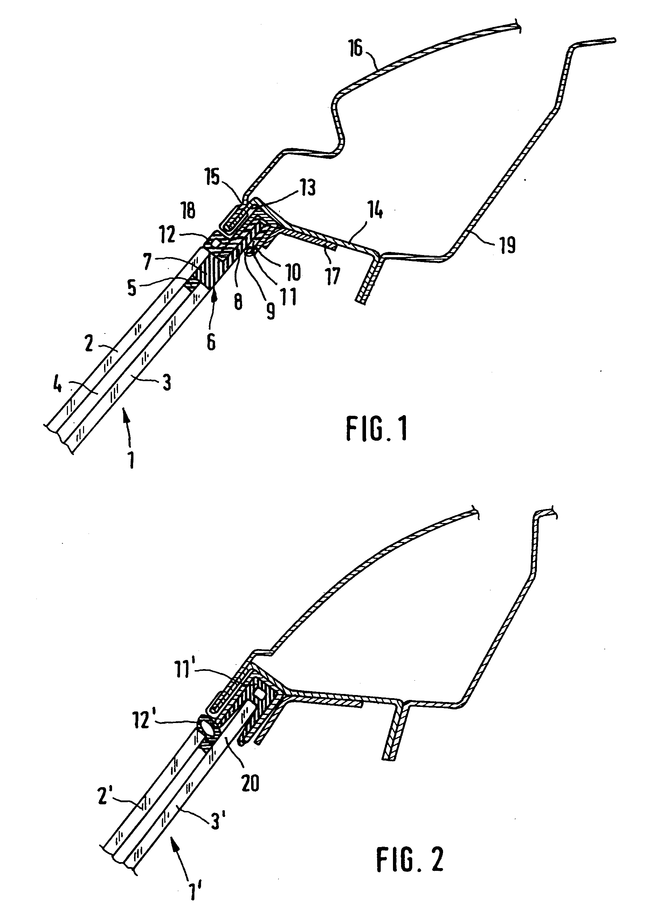

Nachstehend sind Ausführugsformen der erfindungsgemäßen Fahrzeugtür anhand der Zeichnung erläutert. Darin zeigen Fig. 1 bis 4 jeweils einen Querschnitt einer anderen Ausführungsform der Fahrzeugtür, und zwar den oberen Bereich der Türscheibe mit dem benachbarten Bereich der Dachaußenhaut.

Gemäß Fig. 1 besteht die Fensterscheibe einer Kraftfahrzeugtür aus einer Isolierglasscheibe 1, die aus einer Außenscheibe 2 und einer Innenscheibe 3 besteht, die unter Bildung eines gegebenenfalls luftdicht abgeschlossenen Zwischenraumes 4 durch ein Profil 5 auf Abstand gehalten werden.

Die Außenscheibe 2 überragt dabei die Innenscheibe 3. In der sich dadurch ergebenden Stufe ist ein Führungsprofil 6 eingesetzt, das mit seinem Fuß 7 einerseits an die Innenseite der Außenscheibe 2 und andererseits auf die Oberkante der Innenscheibe 3 aufgeklebt ist.

Der auf dem Fuß 7 angeordnete schmälere obere Abschnitt 8 des Führungsprofils 6 greift in eine Nut 9 an der Unterseite des oberen Abschnitts des Fensterrahmens 10 ein. Die Nut 9 ist mit einer Abdichtung 11 ausgekleidet, die sich an der Türaußenseite bis auf Höhe der Oberkante der Außenscheibe 2 erstreckt und an dem der Außenscheibe 2 zugewandten Rand mit einem als Schlauchdichtung ausgebildeten Dichtprofil 12 versehen ist.

Der Fensterrahmen 10 greift in eine Nut 13 am Seitenrahmen 14 ein. Der Seitenrahmen 14 ist dazu an seiner Außenseite nach unten abgekantet und mit einem den Fensterrahmen 10 übergreifenden Abschnitt 15 der Dachaußenhaut 16 verschweißt.

Die Innenseite der Nut 13 wird durch ein unten an das äußere Rahmenteil des Seitenrahmens14 geschweißtes Winkelprofil 17 gebildet. Auf die durch Zusammenschweißen des nach unten abgekanteten Flansches des Seitenrahmens 14 und des Abschnitts 15 der Dachaußenhaut 16 gebildete scharfe Kante ist ein U-Profil 18 aus Metall oder Kunststoff aufgesteckt. Mit einem Innenflansch ist das äußere Rahmenteil des Seitenrahmens 14 mit dem inneren Seitenrahmen 19 des Kraftfahrzeuges verbunden.

In Fig. 1 ist der Fensterrahmen 10 bei geschlossener Tür dargestellt. Um die Fahrzeugtür öffnen zu können, ist der Fensterrahmen 10 absenkbar ausgebildet. D. h. beispielsweise bei Betätigung des Türgriffs innen oder außen bewegt sich der Fensterrahmen 10 zusammen mit der Isolierglasscheibe 1 bis unterhalb des ihn übergreifenden Abschnitts 15 der Dachaußenhaut 16, also aus der Nut 13 im Seitenrahmen 14 heraus, nach unten, so daß die Tür geöffnet werden kann, während nach dem Schließen der Tür der Fensterrahmen 10 aus der abgesenkten Stellung angehoben wird, d. h. wieder in die Nut 13 im Seitenrahmen 14 eingreift. Das Senken und Heben des Fensterrahmens kann dabei elektrisch oder pneumatisch erfolgen.

Durch die Schlauchdichtung 12 zwischen der Oberkante der Außenscheibe 2 und der unteren Kante des Abschnitts 15 der Dachaußenhaut 16 wird eine zuverlässige Abdichtung der Nut 13 im Seitenrahmen 14 gegenüber Luft, Schmutz und Geräuschen sichergestellt.

Das Führungsprofil 6 kann z. B. aus hoch beanspruchbarem Kunststoff oder Metall bestehen. Mit dem U-Profil 18 kann stilistischen Feinheiten Rechnung getragen werden.

Die Ausführungsform nach Fig. 2 unterscheidet sich von derjenigen nach Fig. 1 im wesentlichen dadurch, daß das Führungsprofil 6 durch einen Überstand 20 der Innenscheibe 3' gegenüber der Außenscheibe 2' der Isolierglasscheibe gebildet wird und die Schlauchdichtung 12' an der Oberkante der Außenscheibe 2' befestigt ist, z. B. durch Kleben oder Aufvulkanisieren. Diese Ausführungsform ist deswegen kostengünstiger, weil das Schlauchprofil 12' bereits vom Isolierglashersteller angebracht werden kann und ein gesondertes Führungsprofil wegfällt. Die Abdichtung 11' in der Nut 9' des Fensterrahmens 10' ist dabei am Nutgrund mit einer weiteren Schlauchdichtung versehen.

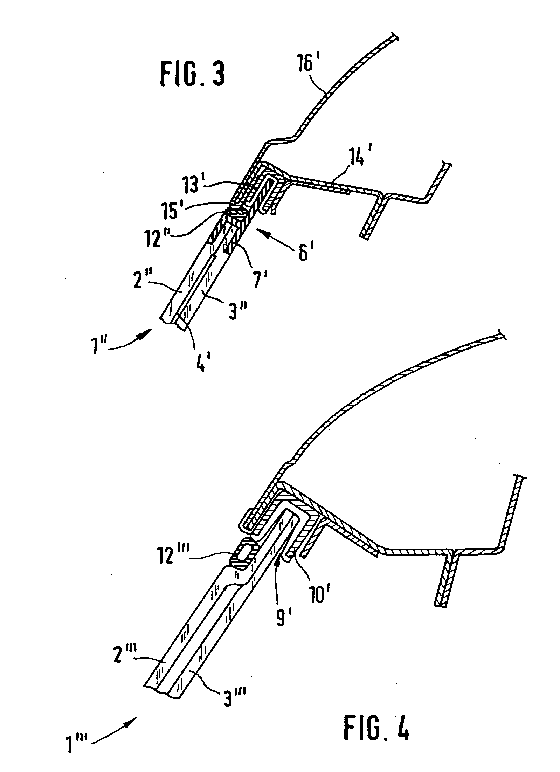

Die Ausführungsform nach Fig. 3 unterscheidet sich von derjenigen nach Fig. 1 im wesentlichen dadurch, daß der Fuß 7' des Führungsprofils 6' U-förmig ausgebildet ist und damit jeweils die Außenscheibe 2'' und die Innenscheibe 3'' an ihren Außenseiten übergreift, wodurch eine große Klebefläche des Führungsprofils 6' an der Isolierglasscheibe 1'' erreicht wird.

Zugleich ist der Zwischenraum 4' schmäler, wobei die Scheiben 2'' und 3'' unter Weglassung des Profils 5 z. B. durch Zusammenwalzen ihrer Oberkanten im teigigen Zustand miteinander verbunden sind. Diese Ausführungsform ist vor allem dann zweckmäßig, wenn die Nut 13' im Seitenrahmen 14' besonders schmal ausgebildet werden soll.

Ferner ist der Abschnitt 15' der Dachaußenhaut 16' nach innen gebördelt, so daß auf ein U-Profil, wie das U-Profil 18 gemäß Fig. 1 verzichtet werden kann.

Die Schlauchdichtung 12'' ist dabei auf dem Fuß 7' des Führungsprofils 6' befestigt.

Bei der Ausführungsform nach Fig. 4 ist im Unterschied zu derjenigen nach Fig. 1 die Außenscheibe 2''' an ihrer Oberkante zur Innenscheibe 3''' hin abgekröpft, so daß die Oberkante der Innenscheibe 3''' zusammen mit der daran anliegenden Oberkante der Außenscheibe 2''' die Führung der Scheibe 1''' in der Nut 9' des Fensterrahmens 10' bildet. Die Schlauchdichtung 12''' ist dabei in der sich durch die Abkröpfung ergebenden Stufe an der Außenseite der Außenscheibe 2''' befestigt, z. B. aufgeklebt oder aufvulkanisiert.

## Patentansprüche

1. Fahrzeug mit einer Fahrzeugtür, die als Fensterscheibe eine Zweischeiben-Isolierglasscheibe (1, 1', 1'', 1''') aufweist, deren Außenscheibe (2, 2', 2'', 2''') etwa bündig mit der Dachaußenhaut (16) des Fahrzeugs verläuft und deren Innenscheibe (3, 3', 3'', 3''') über die Außenscheibe (2, 2', 2'', 2''') mit einer Führung vorsteht, mit der sie in eine Nut (9, 9') im Fensterrahmen (10, 10') der Fahrzeugtür eingreift, wobei die Zweischeiben-Isolierglasscheibe (1, 1', 1'', 1''') gegenüber dem Fensterrahmen (10, 10') verlagerbar angeordnet ist, dadurch gekennzeichnet, daß der Seitenrahmen (14, 14') des Fahrzeugs einen Abschnitt (15, 15') aufweist, mit dem er bei geschlossener Fahrzeugtür den Fensterrahmen (10, 10') außen übergreift und daß der Fensterrahmen (10, 10') beim Öffnen der Fahrzeugtür zumindest bis unterhalb des ihn übergreifenden Abschnitts (15, 15') des Seitenrahmens (14, 14') absenkbar ausgebildet ist.

2. Fahrzeug nach Anspruch 1, dadurch gekennzeichnet, daß der Fensterrahmen (10, 10') in eine Nut (13, 13') im Seitenrahmen (14, 14') eingreift, wobei die Außenseite der Nut (13, 13') durch einen den Fensterrahmen (10, 10') übergreifenden Dachaußenhaut-Abschnitt (15, 15') gebildet wird.

3. Fahrzeug nach einem der Ansprüche 1 bis 2, dadurch gekennzeichnet, daß die Führung an der Innenscheibe (3, 3'') durch ein Führungsprofil (6, 6') gebildet wird, welches auf die Isolierglasscheibe (1, 1'') geklebt ist.

4. Fahrzeug nach Anspruch 3, dadurch gekennzeichnet, daß die Außenscheibe (2) die Innenscheibe (3) überragt und das Führungsprofil (6) an die Innenseite der Außenscheibe (2) und die obere Kante der Innenscheibe (3) geklebt ist (Fig. 1).

5. Fahrzeug nach Anspruch 3, dadurch gekennzeichnet, daß das Führungsprofil (6') die Außenscheibe (2'') und die Innenscheibe (3'') jeweils von außen übergreift (Fig. 3).

6. Fahrzeug nach Anspruch 5, dadurch gekennzeichnet, daß die Oberkante der Außenscheibe (2'') und die Oberkante der Innenscheibe (3'') aneinanderliegen.

7. Fahrzeugtür nach einem der Ansprüche 1 bis 2, dadurch gekennzeichnet, daß die Außenscheibe (2''') an ihrer Oberkante zur Innenscheibe (3''') hin abgekröpft ist, wobei die Oberkante der Innenscheibe (3''') zusammen mit der Oberkante der daran anliegenden Außenscheibe (2''') die Führung in der Nut (9') des Fensterrahmens (10') bilden (Fig. 4).

8. Fahrzeug nach einem der vorstehenden Ansprüche, dadurch gekennzeichnet, daß die Außenscheibe (2, 2', 2'', 2''') gegenüber der Dachaußenhaut (16) durch ein Dichtprofil (12, 12', 12'', 12''') abgedichtet ist.

## Claims

1. A vehicle with a vehicle door having a two-paned insulating glass pane (1,1',1'',1''') as a window pane the outer pane (2,2',2'',2''') of which runs approximately flush with the outer skin (16) of the roof of the vehicle and the inner pane (3,3',3'',3''') of which is provided - above or over the outer pane (2,2',2'',2''') - with a guide by means of which it engages in a groove (9,9') in the window frame (10,10') of the vehicle door, and the two-paned insulating glass pane (1,1',1'',1''') being arranged so as to be displaceable with respect to the window frame (10,10'), characterised in that the lateral frame (14,14') of the vehicle has a section (15,15') by which it overlaps the window frame (10,10') externally when the vehicle door is shut, and in that the window frame (10,10') is constructed so as to be lowerable on opening of the vehicle door to at least below the section (15,15') of the lateral frame (14,14') overlapping it.

2. A vehicle according to Claim 1, characterised in that the window frame (10,10') engages in a groove (13,13') in the lateral frame (14,14'), and the outer side of the groove (13,13') is formed by a section (15,15') of the outer skin of the roof overlapping the window frame (10,10').

3. A vehicle according to either one of Claims 1 and 2, characterised in that the guide is formed on the inner pane (3,3'') by a guide section (6,6') which is bonded onto the insulating glass pane (1,1'').

4. A vehicle according to Claim 3, characterised in that the outer pane (2) projects beyond the inner pane (3) and the guide section (6) is bonded to the inner side of the outer pane (2) and the upper edge of the inner pane (3) (Fig. 1).

5. A vehicle according to Claim 3, characterised in that the guide section (6') overlaps the outer pane (2'') and the inner pane (3'') in each case from the exterior (Fig. 3).

6. A vehicle according to Claim 5, characterised in that the upper edge of the outer pane (2'') and the upper edge of the inner pane (3'') lie against each other.

7. A vehicle door according to either one of Claims 1 and 2, characterised in that the outer pane (2''') is offset on its upper edge towards the inner pane (3'''), and the upper edge of the inner pane (3'''), together with the upper edge of the outer pane (2''') lying against it, form the guide in the groove (9') of the window frame (10') (Fig. 4).

8. A vehicle according to any one of the preceding claims, characterised in that the outer pane (2,2',2'',2''') is sealed with respect to the outer skin (16) of the roof by a sealing section (12,12',12'',12''').

## Revendications

1. Véhicule avec une portière, qui a comme vitre un vitrage en verre isolant à deux vitres (1, 1', 1'', 1''') dont la vitre extérieure (2, 2', 2'', 2''') se développe à fleur de la bordure extérieure du toit (16) du véhicule et dont la vitre intérieur (3, 3', 3'', 3''') déborde de la vitre extérieure (2, 2', 2'', 2''') par un guidage, par lequel elle s'enclenche dans une rainure (9, 9') du cadre de la fenêtre (10, 10') de la portière du véhicule, le vitrage isolant à deux vitres (1, 1', 1'', 1''') étant monté en pouvant se déplacer par rapport au cadre de la fenêtre (10, 10'), Véhicule caractérisé :
- en ce que le cadre latéral (14, 14') du véhicule a un tronçon (15, 15'), avec lequel il recouvre extérieurement, avec la portière du véhicule fermée, le cadre de fenêtre (10, 10') et,
- en ce que le cadre de fenêtre (10, 10') pour pouvoir ouvrir la porte du véhicule peut être abaissé jusqu'au-dessous du tronçon (15, 15') qui le recouvre du cadre latéral (14, 14').

2. Véhicule selon la revendication 1, caractérisé :
- en ce que le cadre de fenêtre (10, 10') s'insère dans une rainure (13, 13') du cadre latéral (14, 14'), le côté extérieur de la rainure (13, 13') étant constitué par un tronçon de la bordure extérieure du toit (15, 15') recouvrant le cadre de la fenêtre (10, 10').

3. Véhicule selon l'une des revendications 1 et 2, caractérisé :
- en ce que le guidage sur la vitre intérieure (3, 3'') est constitué par un profilé (6, 6'), qui est collé sur le vitrage isolant (1, 1'').

4. Véhicule selon la revendication 3, caractérisé :
- en ce que la vitre extérieure (2) dépasse au-delà de la vitre intérieure (3) et le profilé de guidage (6) est collé contre la face intérieure de la vitre extérieure (2) et sur l'arête supérieure de la vitre intérieure (3) (figure 1).

5. Véhicule selon la revendication 3, caractérisé :
- en ce que le profilé de guidage (6') recouvre la vitre extérieure (2'') et la vitre intérieur (3'') respectivement de l'extérieur.

6. Véhicule selon la revendication 5, caractérisé :
- en ce que le bord supérieur de la vitre extérieure (2'') et le bord supérieur de la vitre intérieure (3'') sont placés l'un contre l'autre.

7. Portière de véhicule selon l'une des revendications 1 et 2, caractérisee :
- en ce que la vitre extérieure (2''') est coudée sur son bord supérieur en direction de la vitre intérieure (3'''), le bord supérieur de la vitre intérieure (3''') conjointement avec le bord supérieur de la vitre extérieure (2''') appuyé sur le précédent constituant le guidage dans la rainure (9') du cadre de fenêtre (10') (figure 4).

8. Véhicule selon l'une des revendications précédentes, caractérisé :
- en ce que la vitre extérieure (2, 2', 2'', 2''') est rendue étanche vis-à-vis de la bordure extérieure du toit (16) par un profilé d'étanchéité (12, 12', 12'', 12''').
